# EUROPÄISCHE PATENTSCHRIFT

(11) **EP 2 578 911 B1**
(45) Veröffentlichungstag und Bekanntmachung des Hinweises auf die Patenterteilung: **16.09.2015**
(21) Anmeldenummer: 13150333.6
(22) Anmeldetag: 15.10.2008
(51) Int. Cl.: F16K 31/00, F16K 31/02, F24D 19/10, G05D 23/275

(54) **Stellvorrichtung für Heizkreisventile**
Adjustment device for heating cycle valves
Dispositif de réglage pour soupapes de circuit de chauffage

(43) Veröffentlichungstag der Anmeldung: 10.04.2013
(62) Teilanmeldung aus: 08166725.5
(73) Patentinhaber: Claro Feinwerktechnik AG, 8902 Urdorf (CH)
(72) Erfinder: Klaus, Ortwin, 6300 Zug (CH)
(74) Vertreter: Rutz & Partner

(56) Entgegenhaltungen:
- DE-A1- 3 040 151
- DE-U1- 29 915 926
- FR-A1- 2 428 195
- GB-A- 936 136

## Beschreibung

Die Erfindung betrifft eine Stellvorrichtung für Heizkreisventile sowie ein Heizkreisventil.

Eine gattungsgemässe Stellvorrichtung ist beispielsweise aus [1], DE 101 12 703 C1, bekannt. Mittels Stellvorrichtungen dieser Art kann ein von einer Kolbenfeder gestützter Ventilkolben eines Heizkreisventils von einer ersten Lage, in der das Heizkreisventil geöffnet ist, gegen die Kraft der Kolbenfeder in eine zweite Lage verschoben werden, in der das Heizkreisventil geschlossen ist. Bekannt sind zwei verschiedene Betriebsarten der Stellvorrichtung. Das Heizkreisventil kann in der Ruhelage der Stellvorrichtung, in der kein Betriebsstrom zugeführt wird, geschlossen oder geöffnet sein. Das heisst, der Ventilkolben des Heizkreisventils wird erst bei Stromzufuhr durch den Aktuator gegen die Kolbenfeder zurückgedrängt, wodurch das Heizkreisventil schliesst, oder der Ventilkolben kann bei Stromzufuhr mit Unterstützung des Aktuators ausfahren, wodurch das Heizkreisventil öffnet.

Eine Stellvorrichtung für ein Heizkreisventil, mittels dessen beide Betriebsarten ("stromlos offen" und "stromlos zu") realisierbar sind, ist aus [2], DE 299 15 926 U1, bekannt.

Die mit einem Aussengehäuse versehene Stellvorrichtung gemäss [1] weist ein thermomechanisches Arbeitselement bzw. einen Aktuator mit einem ausfahrbaren Aktuatorstössel auf, welcher in der Betriebsart "stromlos offen" ein Stellteil antreiben und in der Betriebsart "stromlos zu" eine Rückstellfeder zurückdrängen kann, welche auf das Stellteil einwirkt.

In der Betriebsart "stromlos offen" ist das Gehäuse des Aktuators stationär gehalten, während der Aktuatorstössel bei Stromzufuhr ausfahren und das Stellteil sowie den Ventilkolben zurück stossen und das Heizkreisventil schliessen kann.

In der Betriebsart "stromlos zu" ist der Aktuatorstössel stationär gehalten, während das Aktuatorgehäuse bei Stromzufuhr axial verschoben wird, weshalb die Rückstellfeder zurückgedrängt wird und das Stellteil sowie der Ventilkolben ausfahren können und das Heizkreisventil geöffnet wird.

Zum Ausfahren des Aktuatorstössels ist in einem thermoelektrischen Aktuator ein Dehnmaterial vorgesehen, das sich bei Erwärmung relativ stark ausdehnt und den Aktuatorstössel nach aussen schiebt. Zur Erwärmung des Aktuators bzw. des darin enthaltenen Dehnmaterials ist der Aktuators mit einem Heizelement, z.B. einem PTC-Widerstand, gekoppelt, welchem über elektrische Leitungen Energie zuführbar ist. Durch Unterbrechung der Stromzufuhr zum Heizelement und Abkühlung des Aktuators kann der Aktuatorstössel durch die Kraft der Kolbenfeder (Betriebsart "stromlos offen") bzw. durch die Rückstellfeder (Betriebsart "stromlos zu") wieder in den Aktuator hinein verschoben werden.

Bei der in [1] beschriebenen Stellvorrichtung ist der Aktuatorstössel dem Heizkreisventil abgewandt. Bei der in [2] beschriebenen Stellvorrichtung ist der Aktuatorstössel dem Heizkreisventil hingegen zugewandt.

Unabhängig von der konkreten Ausgestaltung resultieren bei den beschriebenen Stellvorrichtungen zahlreiche Nachteile.

Die Stellvorrichtungen sind kompliziert aufgebaut und weisen zahlreiche aufwändig ausgestaltete Vorrichtungsteile auf, die mit entsprechendem Kostenaufwand hergestellt und montiert werden müssen und zudem viel Platz in Anspruch nehmen.

Die aufwändige Ausgestaltung der Vorrichtungsteile ist insbesondere auch durch die Verlegung der mit dem Heizelement verbundenen Versorgungsleitungen bedingt.

Sofern das Aktuatorgehäuse während des Betriebs nicht stationär gehalten wird, resultiert zusätzlich die Gefahr, dass sich die Anschlüsse der Versorgungsleitungen nach längerer Betriebsdauer lösen können.

Bei gattungsgemässen Stellvorrichtungen ist ferner zu beachten, dass kein Wasser eindringen darf, welches Oxidationsschäden, Kriechströme oder gar einen Kurzschluss verursachen könnte. Viele der bekannten Stellvorrichtungen können daher nur vertikal ausgerichtet, oberhalb einer Heizwasserleitung oder horizontal montiert werden, so dass aus dem Heizkreisventil austretendes Wasser nicht in die Stellvorrichtung eindringen kann.

Bei der in [1] beschriebenen Stellvorrichtung ist das Stellteil hingegen mit einem Dichtungsring versehen, welcher das Eindringen von Wasser verhindert. Nachteilig bei dieser Lösung ist hingegen, dass der Dichtungsring zusammen mit dem Stellteil während des Betriebs der Stellvorrichtung oft bewegt und dadurch abgenutzt wird, so dass nach längerer Betriebsdauer mit undichten Stellen zu rechnen ist und Wartungsarbeiten erforderlich sind.

Die in [1] und [2] gezeigten Stellvorrichtungen sind ferner mit einer Anzeige versehen, welche den Zustand der Stellvorrichtung signalisieren soll. Dazu weist das Gehäuse der Stellvorrichtung ein Fenster auf, welches den Blick auf die Position des Stellteils frei gibt. Diese Anzeige lässt jedoch nicht alle erforderlichen Rückschlüsse auf den Zustand der Stellvorrichtung und den Zustand Heizkreisventils zu.

Um zusätzliche Informationen über deren Zustand zu gewinnen, ist in der Stellvorrichtung von [1] eine Lichtquelle (z. B. eine Leuchtdiode LED oder eine Glimmlampe) vorgesehen, die an den für das thermomechanische Arbeitselement vorgesehenen Heizstromkreis angeschlossen ist. Sofern trotz aktiver Lichtquelle kein Hub des Stellteils erkennbar ist, so liegt gemäss [1] ein Defekt am thermomechanischen Arbeitselement vor. Diese Aussage ist jedoch nur bedingt zutreffend, da die Möglichkeit besteht, dass innerhalb des Heizkreisventils Mängel auftreten, weshalb der Rückschluss auf eine Fehlfunktion des Aktuators bzw. des thermomechanischen Arbeitselements nicht immer zutreffen muss.

Aus der Publikation FR 2 428 195 A1 ist ferner ein ferngesteuertes Ventil für Flüssigkeitsleitungen bekannt, welches einen dem Verschließen eines Kanals dienenden Kolben aufweist, der in Abhängigkeit der Ausdehnung eines Balges verschoben wird, der mittels eines stationär installierten Heizelements erwärmt werden kann, um den Kolben zu verschieben und den Kanal zu verschließen.

Der vorliegenden Erfindung liegt daher die Aufgabe zugrunde, eine verbesserte Stellvorrichtung für Heizkreisventile sowie ein Heizkreisventil mit einer solchen Stellvorrichtung zu schaffen.

Die Stellvorrichtung soll einfach aufgebaut und mit reduzierten Abmessungen realisierbar sein. Ferner soll die Anzahl der Vorrichtungsteile im Vergleich zu bekannten Stellvorrichtungen reduziert oder deren Ausgestaltung signifikant vereinfacht werden, so dass auf teure Werkzeuge zu deren Herstellung verzichtet werden kann.

Die Stellvorrichtung soll zudem in beliebigen Lagen mit dem Heizkreisventil verbindbar sein, ohne dass Wasser in die Stellvorrichtung eindringen und Schäden an den Vorrichtungsteilen bewirken oder deren Funktion beeinträchtigen kann.

Weiterhin soll die Stellvorrichtung mit reduziertem Aufwand hergestellt werden können. Wartungsarbeiten sollen dabei auch nach längerer Betriebsdauer der Stellvorrichtung vermieden werden. Insbesondere soll die erfindungsgemässe Stellvorrichtung keine Verschleissteile aufweisen, die nach kürzerer oder längerer Betriebsdauer zu ersetzen sind.

Weiterhin soll der Anschluss der elektrischen Leitungen vereinfacht werden, wobei das Auftreten von Defekten an den Anschlussstellen auch nach längerem Betrieb der Stellvorrichtung vermieden werden soll.

Der Betriebszustand der erfindungsgemässen Stellvorrichtung und des damit verbundenen Heizkreisventils soll ferner einfacher und besser überwacht werden können, ohne dass zusätzliche elektrische Vorrichtungen, wie Leuchtvorrichtungen eingesetzt werden, die selbst wiederum fehleranfällig sind.

Diese Aufgabe wird mit einer für Heizkreisventile vorgesehenen Stellvorrichtung gelöst, welche die in Anspruch 1 angegebenen Merkmale aufweist. Vorteilhafte Ausgestaltungen der Erfindung sind in weiteren Ansprüchen angegeben.

Die für die Betätigung von Heizkreisventilen vorgesehene Stellvorrichtung weist ein- oder mehrteiliges Vorrichtungsgehäuse auf, in dem eine Rückstellfeder, ein Stellteil und ein mit einer ersten und einer zweiten elektrischen Versorgungsleitung verbundener Aktuator vorgesehen sind, der ein Aktuatorgehäuse und einen ausfahrbaren Aktuatorstössel aufweist.

Erfindungsgemäss ist die Rückstellfeder einerseits am Vorrichtungsgehäuse und andererseits direkt am Aktuatorgehäuse abgestützt. Für die Betriebsart "stromlos zu" ist das Aktuatorgehäuse auf das Stellteil abgestützt, während der Aktuatorstössel am Vorrichtungsgehäuse anliegt. Das Aktuatorgehäuse wird von der Rückstellfeder daher gegen das Stellteil und somit gegen den Ventilkolben gedrückt, weshalb der Aktuatorstössel und dadurch auch der Ventilkolben bei der Stromzufuhr zum Aktuator ausfahren und das Heizkreisventil geöffnet wird. Nach der Deaktivierung des Aktuators werden der Aktuatorstössel und der Ventilkolben durch die Rückstellfeder zurückgestellt und das Heizkreisventil geschlossen. Die Federkraft der Rückstellfeder muss daher grösser sein, als die Federkraft der Kolbenfeder des Heizkreisventils.

Für die Betriebsart "stromlos offen" liegt das Aktuatorgehäuse am Vorrichtungsgehäuse an, während der Aktuatorstössel auf das Stellteil abgestützt ist. Der Aktuator ist daher mittels der Rückstellfeder stationär gehalten, während der Aktuatorstössel ausfahren und den Ventilkolben zurückstossen und das Heizkreisventil schliessen kann. Nach der Deaktivierung des Aktuators wird der Aktuatorstössel mittels der Kolbenfeder des Heizkreisventils zurückgestossen und das Heizkreisventil wieder geöffnet. Auch in diesem Fall muss die Federkraft der Rückstellfeder grösser sein, als die Federkraft der Kolbenfeder des Heizkreisventils, weshalb für beide Betriebsarten dieselben Federelemente verwendet werden.

Aufgrund des einfachen Aufbaus der Stellvorrichtung kann diese in einer vorzugsweisen Ausgestaltung mit wenigen Handgriffen konfiguriert werden, um entweder die Betriebsart "stromlos zu" oder "stromlos offen" zu realisieren. Ferner kann die Stellvorrichtung auch nur für die eine oder die andere Betriebsart vorgesehen sein.

Durch die direkte mechanische Kopplung der Rückstellfeder mit dem Aktuatorgehäuse entfällt wenigstens ein Vorrichtungsteil. Anstelle eines zweiteiligen Stellteils, wie dies in [1] vorgesehen ist, kann nur ein einteiliges Stellteil verwendet werden. Dadurch reduzieren sich einerseits die Herstellungskosten der Stellvorrichtung. Andererseits wird kein Raum für das zweite Teil des Stellteils benötigt, weshalb eine vorteilhafte Raumaufteilung innerhalb des Vorrichtungsgehäuses realisierbar ist, welches vorzugsweise aus einem als Abdeckung dienenden ersten Gehäuseteil und einem zweiten Gehäuseteil besteht, das Montageelemente aufweist, die dem Halten des Aktuators und des Stellteils dienen. Vorzugsweise werden Gehäuseteile verwendet, die im Wesentlichen rotationssymmetrisch ausgestaltet sind.

Ferner reduziert sich bereits aufgrund der Vermeidung eines zweiteiligen Stellteils der Aufwand für den Zusammenbau und die Wartung der Stellvorrichtung.

Die Rückstellfeder ist vorzugsweise eine konisch verlaufende Spiralfeder, die an der Seite mit dem grösseren Durchmesser am Vorrichtungsgehäuse, vorzugsweise am lösbaren ersten Gehäuseteil, und an der Seite mit dem kleineren Durchmesser am Aktuator anliegt. Diese konische Ausgestaltung erlaubt eine schlanke und ästhetisch vorteilhafte Ausgestaltung der Stellvorrichtung, insbesondere einen konischen Verlauf des zweiten Gehäuseteils. Dies ist auch deshalb besonders vorteilhaft, weil in dem Bereich, in dem das zweite Gehäuseteil verjüngt ist, das Anschlusskabel aufgewickelt werden kann. Der durch die vorteilhafte Ausgestaltung der Rückstellfeder gewonnene Raum kann daher vorteilhaft genutzt werden, weshalb die erfindungsgemässe Stellvorrichtung in einer Verpackung mit reduzierten Abmessungen verpackt werden kann.

Ferner kann eine derart ausgestaltete Rückstellfeder besonders einfach montiert werden. Vorzugsweise weist das Aktuatorgehäuse ein beispielsweise ringförmiges Flanschsegment mit Halteringen auf, in denen die Rückstellfeder verankert werden kann. Das Flanschsegment wird dabei vorzugsweise derart angeordnet, dass ein Teil der Aktuatorgehäuses von der Rückstellfeder umschlossen ist. Der Raum innerhalb der Rückstellfeder wird dadurch vollständig genutzt, weshalb eine kompakte Bauweise der Stellvorrichtung möglich ist.

Das zumindest annähernd rohrförmige zweite Gehäuseteil ist an seiner nach aussen geöffneten Oberseite mit dem ersten Gehäuseteil, das als Abdeckung dient, beispielsweise mittels eines Schnappverschlusses verbindbar. An der gegenüberliegenden, nach aussen geöffneten Unterseite ist das zweite Gehäuseteil mit einem Kopplungsteil und einem mit einem Heizkreisventil verbindbaren Kopplungselement versehen. Beispielsweise ist an der Unterseite eine Aussennut vorgesehen, in der ein Metallring sitzt, mittels dessen eine Überwurfmutter gehalten ist, die mit dem Heizkreisventil verschraubbar ist.

Zwischen der Ober- und Unterseite weist das zweite Gehäuseteil in einer vorzugsweisen Ausgestaltung eine Trennwand auf, die mit einem Aufnahmeteil versehen ist, dessen Zylinderboden mit wenigstens einer Durchtrittsöffnung versehen ist. Das vorzugsweise zylinderförmige Aufnahmeteil dient der Aufnahme und der verschiebbaren oder stationären Lagerung wenigstens eines Teils des Aktuatorgehäuses. Für den Fall der Betriebsart "stromlos offen" ist das Aktuatorgehäuse im Aufnahmeteil stationär gehalten. Für den Fall der Betriebsart "stromlos zu" ist das Aktuatorgehäuse im Aufnahmeteil verschiebbar gehalten.

Die wenigstens eine Durchtrittsöffnung dient, in Abhängigkeit der Betriebsart der Stellvorrichtung, der Durchführung des Aktuatorstössels (bei der Betriebsart "stromlos offen") oder der Durchführung eines am Stellteil vorgesehenen Stössels (bei der Betriebsart "stromlos zu").

Die im zweiten Gehäuseteil vorgesehene Trennwand erlaubt die Unterteilung des zweiten Gehäuseteils in eine erste Kammer, in der die Rückstellfeder und der Aktuator vorgesehen sind, und in eine zweite Kammer, in der das Stellteil vorgesehen ist. Vorbehaltlich der wenigstens einen Durchtrittsöffnung im Aufnahmeteil sind die beiden Kammern durch die Trennwand daher vollständig voneinander getrennt, was hinsichtlich der Montage der Vorrichtungsteile und der Abdichtung der ersten Kammer von besonderer Bedeutung ist.

Vorzugsweise weist das Stellteil eine hutförmige oder zylinderförmige Form auf, so dass das Stellteil derart auf das Aufnahmeteil aufgesetzt werden kann, dass die wenigstens eine Durchtrittsöffnung vollständig überdeckt wird, während der wenigstens eine auf der Zylinderinnenseite des Stellteils vorgesehene Stellteilstössel oder der Aktuatorstössel in die zugehörige Durchtrittsöffnung hineinragt.

In einer vorzugsweisen Ausgestaltung ist das Aufnahmeteil austauschbar, so dass für die Betriebsart "stromlos offen" ein Aufnahmeteil mit einer Durchtrittsöffnung für den Aktuatorstössel oder für die Betriebsart "stromlos zu" ein Aufnahmeteil mit wenigstens einer Durchtrittsöffnung für zugehörige Stellteilstössel einsetzbar ist. Entsprechend werden Stellteile mit und ohne Stellteilstössel vorgesehen.

Beispielsweise werden auswechselbare Aufnahmeteile vorgesehen, die an den Zylinderwänden mit einem Aussengewinde versehen sind, welches in ein Innengewinde der Trennwand eindrehbar ist. Selbstverständlich sind andere Kopplungsarten, wie Bajonettverschlüsse, ebenfalls vorteilhaft verwendbar. Da bei beiden Betriebsarten der Aktuator von der Rückstellfeder gegen das Aufnahmeteil gepresst wird, kann dieses ferner auch nur mittels einer Flanschverbindung in der Trennwand gehalten sein. Beispielsweise wird das Aufnahmeteil durch die erste Kammer hindurch in die Trennwand eingesetzt.

Das Aufnahmeteil einschliesslich der wenigstens einen Durchtrittsöffnung wird durch das hutförmig ausgestaltete Stellteil vollständig überdeckt, weshalb die Stellvorrichtung beliebig montiert werden kann, ohne dass Wasser in die erste Kammer eindringen kann, in der der Aktuator vorgesehen ist. Sofern die Stellvorrichtung mit der ersten Kammer nach oben ausgerichtet ist, kann aufgrund der Schwerkraft kein Wasser zum Aufnahmeteil gelangen. Sofern die Stellvorrichtung mit der ersten Kammer hingegen nach unten ausgerichtet ist, läuft Wasser, das in die an das Heizkreisventil anschliessende zweite Kammer eindringt, über das hutförmige Stellteil ab und wird durch Öffnungen im zweiten Gehäuseteil abgeführt.

Im Bereich der zweiten Kammer vorgesehene Öffnungen im zweiten Gehäuseteil dienen der Ableitung von Wasser und erlauben ferner die Observierung des Stellteils, welches vorzugsweise ein Anzeigeelement aufweist, das zur entsprechenden Öffnung hin ausgerichtet ist. In einer vorzugsweisen Ausgestaltung können auch zwei voneinander getrennte Fensteröffnungen übereinander vorgesehen sein, welche den Zustand der Stellvorrichtung eindeutig anzeigen.

In einer weiteren vorzugsweisen Ausgestaltung ist das Stellteil mit einem Halteelement versehen, welches in eine Längsöffnung im zweiten Gehäuseteil eingreift und darin geführt und gehalten ist.

Oben wurden die besonderen Vorteile erläutert, welche aus der mechanischen Kopplung der Rückstellfeder mit dem Aktuatorgehäuse resultieren. Weitere Vorteile resultieren, wenn die metallene Rückstellfeder zusätzlich zur Stromzufuhr zum Aktuator, beispielsweise zum Heizelement eines thermomechanischen Aktuators, verwendet und dazu einerseits mit der ersten elektrischen Anschlussleitung und andererseits mit einem ersten Anschluss des Aktuators verbunden wird. Die elektrische Verbindung erfolgt dabei vorzugsweise kraftschlüssig, durch Andrücken der Rückstellfeder an entsprechende elektrische Kontakte. Aufgrund der hohen Andruckkraft der Rückstellfeder resultiert dabei eine ausgezeichnete elektrische Verbindung. Die Verbindung kann jedoch auch durch Verlöten oder Verschweissen der Rückstellfeder mit den genannten Kontakten erfolgen. Ferner sind Klinkenverbindungen einsetzbar, mittels derer die eingesetzten Federelemente formschlüssig gehalten werden können.

In einer weiteren vorzugsweisen Ausgestaltung dient eine Kontaktfeder als elektrisches Verbindungselement, welches die zweite Anschlussleitung mit dem zweiten Anschluss des Aktuators verbindet. Die Kontaktfeder ist vorzugsweise zwischen dem Aktuator und dem ersten Gehäuseteil angeordnet.

Die Rückstellfeder, der Aktuator mit dem Aktuatorstössel und, sofern vorhanden, die Kontaktfeder sind vorzugsweise koaxial zur Hauptachse der Stellvorrichtung ausgerichtet. Sofern beide koaxial ausgerichteten Federelemente, die Rückstellfeder und die Kontaktfeder, einerseits am ersten Gehäuseteil und andererseits am Aktuator anliegen, so addieren sich deren Federkräfte. Die Rückstellfeder wird daher durch die Kontaktfeder unterstützt und kann somit weniger stark dimensioniert werden.

In einer weiteren vorzugsweisen Ausgestaltung weist das erste Gehäuseteil eine Deckelöffnung auf, die der Durchführung eines Signalzapfens dient, der auf dem Aktuator sitzt und somit die Position und den Betriebszustand des Aktuators anzeigt. Sofern der vorzugsweise ebenfalls koaxial zur Hauptachse der Stellvorrichtung ausgerichtete Signalzapfen ausgefahren ist, wurde der Stössel des Aktuators ausgefahren und das Aktuatorgehäuse angehoben, wodurch der Weg für das Stellteil und den Ventilkolben freigegeben wurde. Der Signalzapfen zeigt daher an, dass die Stellvorrichtung derart eingestellt wurde, dass das Heizkreisventil öffnen kann. Es wird jedoch nicht angezeigt, ob das Heizkreisventil tatsächlich geöffnet hat und der Ventilkolben des Heizkreisventils ausgefahren wurde.

Das tatsächliche Öffnen des Heizkreisventils kann hingegen anhand der Überprüfung der Position des Stellteils durch die entsprechenden Öffnungen festgestellt werden. Damit das Stellteil in jeder Lage der Stellvorrichtung die Position des Ventilkolbens korrekt anzeigt, wird zwischen dem Aufnahmeteil und dem Stellteil vorzugsweise ein Federelement vorgesehen, welches das Stellteil gegen den Ventilkolben andrückt.

Durch die erfindungsgemässe Verwendung von zwei voneinander getrennten Anzeigevorrichtungen können die Zustände der Stellvorrichtung und des Heizkreisventils eindeutig festgestellt werden. Der Signalzapfen signalisiert den Betriebszustand des Aktuators und das Stellteil signalisiert die Stellung des Ventilkolbens des Heizkreisventils.

Damit der Signalzapfen nach dem Einfahren des Aktuatorstössels mit dem Aktuatorgehäuse korrekt zurückgeführt wird, ist der Signalzapfen vorzugsweise mit der Kontaktfeder gekoppelt. Besonders einfach ist dies möglich, indem der Signalzapfen mit einem Flansch versehen wird, welcher mittels der Kontaktfeder gegen das Aktuatorgehäuse gedrückt wird.

In einer weiteren vorzugsweisen Ausgestaltung ist der Signalzapfen mit einer Nase versehen, die innerhalb eines Kanals in der Deckelöffnung durch diese hindurch führbar und nach einer Drehung am Rand der Deckelöffnung arretierbar ist. Die am Flansch anliegende Kontaktfeder wird dadurch gespannt und zieht die Nase gegen die Aussenseite des ersten Gehäuseteils. Nach der Arretierung des Signalzapfens kann das erste Gehäuseteil in einfacher Weise auf das zweite Gehäuseteil aufgesetzt werden. Für den Betrieb der Stellvorrichtung wird der Signalzapfen wieder gelöst.

Nachfolgend wird die Erfindung, einschliesslich weiterer vorzugsweiser Ausgestaltungen, anhand von Zeichnungen beispielsweise näher erläutert. Dabei zeigt:
- Fig. 1: eine erfindungsgemässe Stellvorrichtung 1 mit einem rotationssymmetrische Gehäuse, welches aus einem ersten Gehäuseteil 11 und einem zweiten Gehäuseteil 12 besteht;
- Fig. 2: die Stellvorrichtung 1 von Figur 1 in Explosionsdarstellung, in der eine Kontaktfeder 21, ein Signalzapfen 3, eine Rückstellfeder 22, ein Aktuator 4, ein Stellteil 6, ein Montagering 7 und eine Überwurfmutter 8 gezeigt sind;
- Fig. 3: einen Schnitt durch die für die Betriebsart "stromlos zu" konfigurierte Stellvorrichtung 1 von Figur 1 mit dem Aktuator 4 im Ruhezustand mit eingefahrenem Aktuatorstössel 42;
- Fig. 4: einen Schnitt durch die Stellvorrichtung 1 von Figur 1 mit dem Aktuator 4 in aktivem Zustand mit ausgefahrenem Aktuatorstössel 42;
- Fig. 5: einen Schnitt durch die für die Betriebsart "stromlos offen" konfigurierte Stellvorrichtung 1 von Figur 1 mit dem Aktuator 4 im Ruhezustand mit eingefahrenem Aktuatorstössel 42;
- Fig. 6: das hutförmige Stellteil 6 mit drei darin vorgesehenen Stösseln 61;
- Fig. 7: den Signalzapfen 3 gemäss Figur 2 mit einer der Arretierung dienenden Nase 33 und einem einseitig vorgesehenen Flanschsegment 32, mittels dessen die Kontaktfeder 21 einseitig gehalten wird;
- Fig. 8: das als Abdeckung dienende erste Gehäuseteil 11 mit eingeführten Anschlussleitungen 51,52 und mit der eingesetzten Kontaktfeder 21; und
- Fig. 9: den elektrischen Schaltkreis der Stellvorrichtung 1, in den die Rückstellfeder 22 und die Kontaktfeder 21 seriell eingefügt sind.

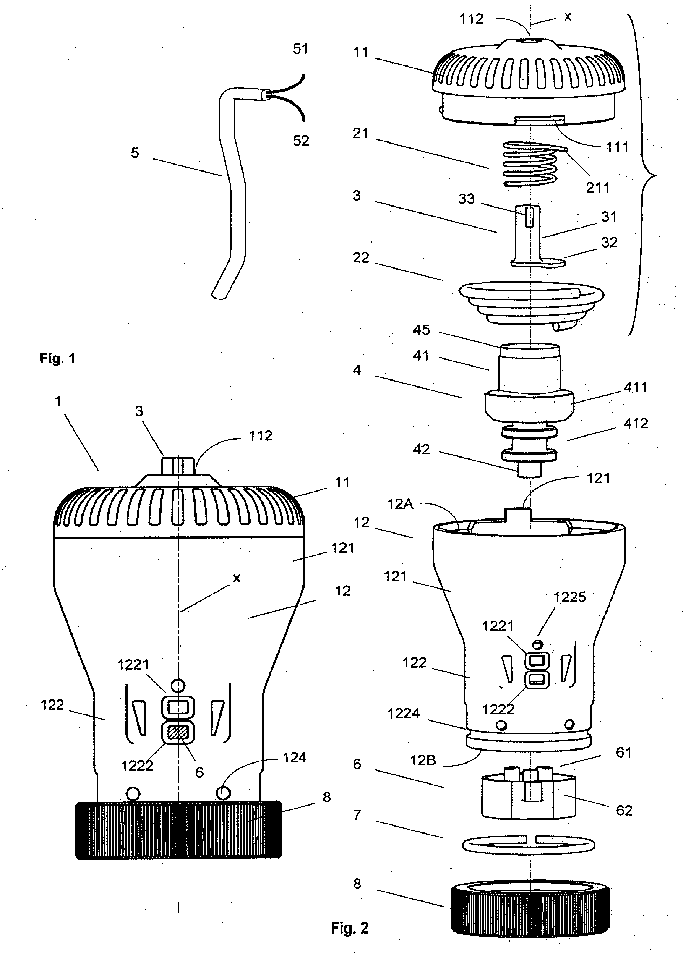

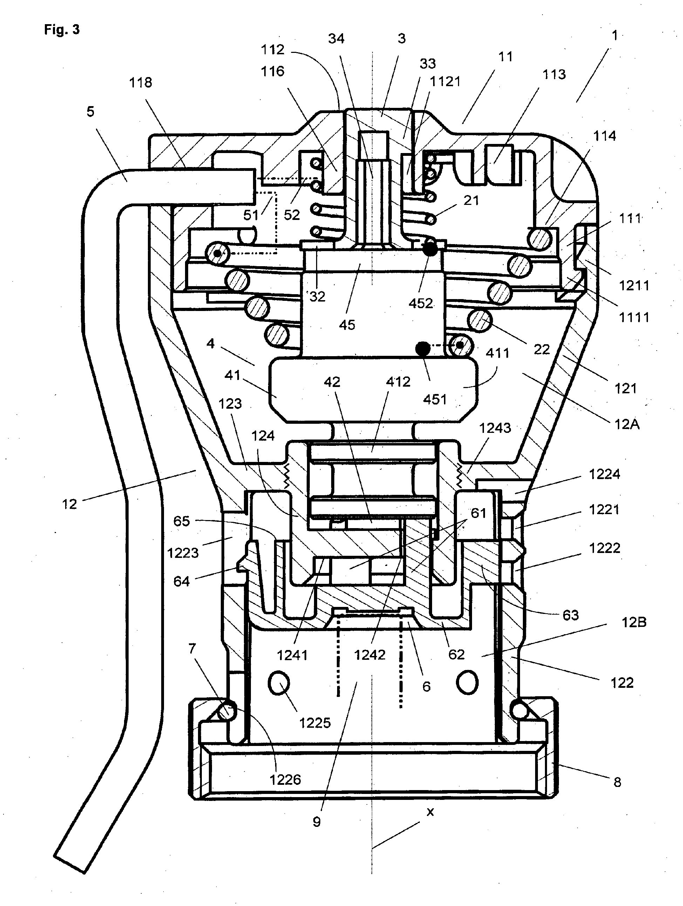

Figur 1 zeigt eine erfindungsgemässe Stellvorrichtung 1 mit einem rotationsymmetrischen Vorrichtungsgehäuse, welches ein lösbares erstes Gehäuseteil 11 aufweist, das als Abdeckung auf ein zweites Gehäuseteil 12 aufsetzbar ist, welches mittels einer Überwurfmutter 8 mit einem Heizkreisventil verbindbar ist. Das rohrförmige zweite Gehäuseteil 12 besteht aus einem teilweise konisch verlaufenden oberen Rohrteil 121 und einem zylindrischen unteren Rohrteil 122, die durch eine Trennwand 123 voneinander getrennt sind, wie dies in Figur 3 gezeigt ist.

In dieser vorzugsweisen Ausgestaltung sind sowohl im ersten als auch im zweiten Gehäuseteil 11, 12 je ein Anzeigeelement 3 bzw. 6 vorgesehen. Im ersten Gehäuseteil 11 ist ein Signalzapfen 3 und im zweiten Gehäuseteil 12 ist das der Betätigung des Ventilkolbens und als Anzeigeelement dienende Stellteil 6 vorgesehen, welches anhand der Fensteröffnungen 1221, 1222 überwacht werden kann.

Es ist gezeigt, dass der Signalzapfen 3 hochgefahren ist, weshalb festgestellt werden kann, dass der in der Stellvorrichtung 1 vorgesehene Aktuator aktiviert wurde. Das Stellteil 6 ist hingegen durch die untere Fensteröffnung 1222 erkennbar, weshalb darauf zu schliessen ist, dass das Stellteil 6 nicht hochgefahren wurde. Da die Stellvorrichtung 1 nicht montiert ist, fehlt nämlich die Einwirkung des Ventilkolbens 9 (siehe Figur 3) des Heizkreisventils. Anhand der erfindungsgemässen Stellvorrichtung 1 kann daher einerseits der Zustand des Aktuators und andererseits die gegebenenfalls fehlerhafte Funktion des Heizkreisventils festgestellt werden kann.

Figur 2 zeigt die Stellvorrichtung 1 von Figur 1 in Explosionsdarstellung mit dem als Abdeckung dienenden ersten Gehäuseteil 11, einer Kontaktfeder 21, dem genannten Signalzapfen 3, einer Rückstellfeder 22, einem Aktuator 4, dem zweiten Gehäuseteil 12, dem genannten Stellteil 6, einem Montagering 7 und einer Überwurfmutter 8. Ferner ist das Anschlusskabel 5 mit einer ersten und einer zweiten Anschlussleitung 51, 52 gezeigt, welche der Stromzufuhr zum Aktuator 4 dienen.

Der einfache Aufbau der erfindungsgemässen Stellvorrichtung 1 ist bereits anhand von Figur 2 ersichtlich, in der die genannten Vorrichtungsteile lediglich entlang der Hauptachse x der Stellvorrichtung 1 gegeneinander verschoben wurden. Durch Ineinanderschieben der Vorrichtungsteile entlang dieser Achse x kann die Stellvorrichtung 1 in einfacher Weise zusammengebaut werden.

Vorzugsweise werden zuerst der Signalzapfen 3, die Kontaktfeder 21 und die Rückstellfeder 22 mit dem ersten Gehäuseteil 11 verbunden. Anschliessend wird der Aktuator 4 auf die Rückstellfeder 22 aufgesetzt, wonach das zweite Gehäuseteil 12 derart auf das erste Gehäuseteil 11 aufgesetzt und mit diesem verbunden wird, dass die vormontierten Teile 3, 21, 22 und 4 in einer ersten Kammer 12A (siehe Figur 3) des zweiten Gehäuseteils 12 gehalten sind. Danach wird das Stellteil 6 von unten in eine zweite Kammer 12B des zweiten Gehäuseteils 12 eingesetzt und mit einem Halteelement 64 in einer Längsöffnung 1223 verankert (siehe Figur 3). Abschliessend wird die Überwurfmutter 8 über das untere Ende des zweiten Gehäuseteils 12 geführt und mittels eines Montageringes 7 fixiert, der in eine am zweiten Gehäuseteil 12 vorgesehene Ringnut 1226 eingesetzt wird.

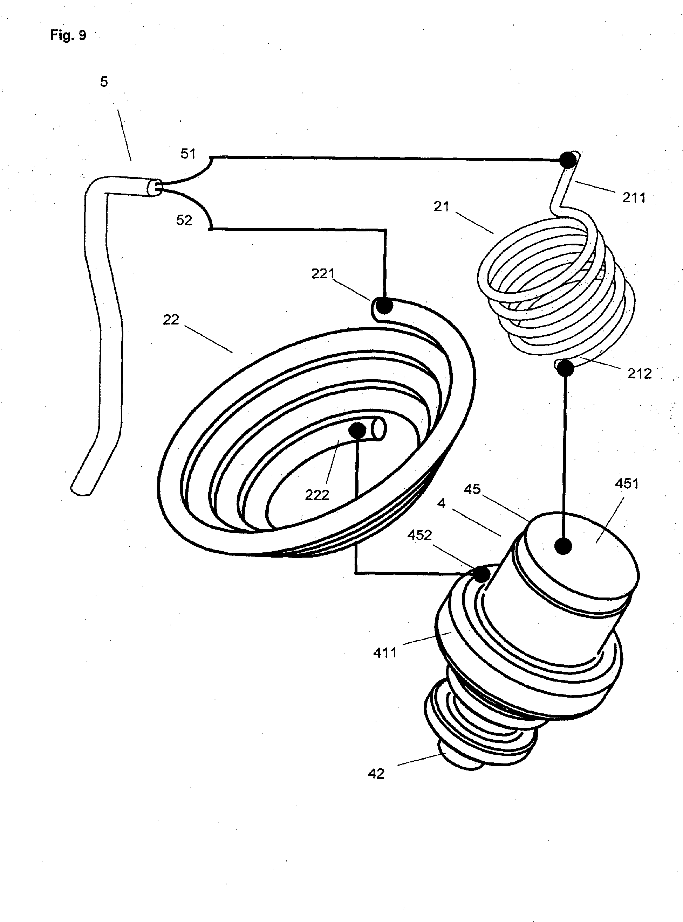

In den Figuren 2 und 3 ist gezeigt, dass die vorzugsweise vorgesehene Kontaktfeder 21 eine zylindrische verlaufende Spiralform mit einem Endstück 211 aufweist, welches der Kontaktierung der zugehörigen Anschlussleitung 52 dient. Mit dem anderen Endstück 212 der Kontaktfeder 21 wird ein Anschlusskontakt 452 des Aktuators 4 kontaktiert (siehe auch Figur 9).

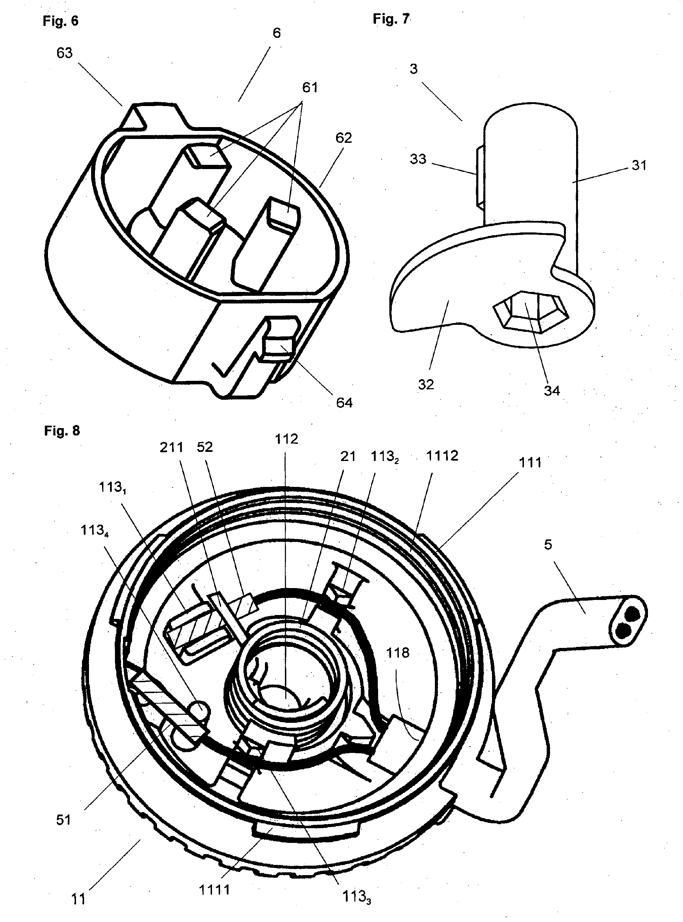

Der in Figur 7 vereinzelt dargestellte Signalzapfen 3 besteht aus einem Schaft 31, an dessen Unterseite ein dem Halten der Kontaktfeder 21 dienendes Flanschsegment 32 und an dessen Oberseite eine der Fixierung des Signalzapfens 3 dienende Nase 33 vorgesehen ist. Der Schaft 31 ist ferner mit einer SechsKant-Bohrung 34 versehen, in die eine Montagehilfe einführbar ist. Anstelle einer Nase kann der Signalzapfen auch mit einer Nut oder Rille versehen sein, in die ein Führungselement hineinragt.

Der mit der Nase 33 versehene Schaft 31 des Signalzapfens 3 wird durch die Kontaktfeder 21 hindurch in eine Deckelöffnung 112 im ersten Gehäuseteil 11 eingeführt. Zur Durchführung der Nase 33 weist die Deckelöffnung 112 einen Seitenkanal 1121 auf. Das Flanschsegment 32 ist nur einseitig vorgesehen, so dass das untere Endstück 212 der Kontaktfeder 21 an einer Seite gehalten ist und auf der anderen Seite an die metallene Oberseite des Aktuators 4 andrücken kann, welche als elektrischer Kontakt 452 dient. Auf diese Weise wird sichergestellt, dass einerseits eine gute elektrische Verbindung zwischen der Kontaktfeder 21 und dem Aktuator 4 resultiert und andererseits der mittels des Flanschsegments 32 gehaltene Signalzapfen 3 dem Aktuator 4 folgt, so dass die jeweilige Lage des Aktuators 4 präzise angezeigt wird.

Für die Montage des ersten Gehäuseteils 11 wird der Signalzapfen 3 so weit durch die Deckelöffnung 112 hindurch geführt, bis die Nase 33 frei liegt und seitlich über die Deckelöffnung 112 gedreht werden kann. Mit dieser Arretierung des Signalzapfens 3 und der Kontaktfeder 21 kann das erste Gehäuseteil 11 in einfacher Weise mit dem zweiten Gehäuseteil 12 verbunden werden. Dazu weisen die beiden Gehäuseteile 11, 12 ineinander verschiebbare Flanschringe 111 mit Montageelementen 1111, 1121 auf, die einen Schnappverschluss bilden. Das erste Gehäuseteil 11 kann daher mit leichtem Druck mit dem zweiten Gehäuseteil 12 verbunden werden. Anschliessend wird der Signalzapfen 3 wieder gelöst.

Die Rückstellfeder 22 ist ebenfalls eine Spiralfeder, die in dieser vorzugsweisen Ausgestaltung jedoch einen sich gegen den Aktuator 4 verjüngenden konischen Verlauf aufweist. Das obere Endstück 221 der Rückstellfeder 22 wird in das erste Gehäuseteil 11 eingespannt und mit einer ersten Anschlussleitung 51 verbunden, die im Bereich einer peripher verlaufenden Schulter 114 im ersten Gehäuseteil 11 gehalten ist. Das untere Endstück 222 der Rückstellfeder 22 liegt an einem flanschförmig ausgestalteten Teil 411 des Aktuatorgehäuses 41 an, welches mit einem weiteren elektrischen Anschlusskontakt 451 versehen ist.

Das Anschlusskabel 5 mit den Anschlussleitungen 51, 52 ist durch eine Öffnung 118 in das erste Gehäuseteil 11 eingeführt, welches in Figur 8 von unten gezeigt ist. Wie dies oben beschrieben wurde, sind die beiden Anschlussleitungen 51, 52 in das erste Gehäuseteil 11 eingeführt und durch Montageelemente 113₁, 113₂, 113₃, 113₄ gehalten. An den Enden der Anschlussleitungen 51, 52 sind metallene Anschlusskontakte vorgesehen, die mit einem Endstück 221 der Rückstellfeder 22 bzw. mit dem Endstück 211 der Kontaktfeder 21 verbunden werden. Die stationäre Anordnung der Anschlussleitungen 51, 52 innerhalb des ersten Gehäuseteils 11 kann mit wenigen Handgriffen vollzogen werden. Weiterhin bleiben die Anschlussleitungen 51, 52 während des Betriebs der Stellvorrichtung zuverlässig mit der Rückstellfeder 22 und der Kontaktfeder 21 verbunden. Besonders vorteilhaft ist, dass die Anschlussleitungen 51, 52 nicht in die Stellvorrichtung 1 hineingezogen und dort an entsprechenden Vorrichtungsteilen montiert werden müssen.

In Figur 8 ist ferner gezeigt, dass das erste Gehäuseteil 11 einen in das zweite Gehäuseteil 12 einschiebbaren Ringflansch 111 aufweist, an dessen Aussenseite Kopplungselemente 1111 für den Schnappverschluss und an dessen Innenseite zwei Halteringe 1112 vorgesehen sind, die dem Halten der Rückstellfeder 22 dienen. Die Rückstellfeder 22 kann daher in das erste Gehäuseteil 11 eingesetzt und dort, am Endstück der ersten Anschlussleitung 51 anliegend, mittels der Halteringe 1112 festgeklemmt werden.

In Figur 8 sind ferner die eingesetzte Kontaktfeder 21 sowie die Deckelöffnung 112 gezeigt, in die der Signalzapfen 3 eingeführt und mitsamt der Kontaktfeder 21 arretiert wird.

Der Aktuator 4 kann grundsätzlich nach beliebigen Prinzipien funktionieren. Es werden vorzugsweise elektromechanische oder thermomechanische Aktuatoren eingesetzt, welche ein Aktuatorgehäuse 41 aufweisen, innerhalb dessen ein ausfahrbarer Stössel 42 gelagert ist. In den beschriebenen Ausführungsbeispielen ist ein thermomechanischer Aktuator 4 eingesetzt, der ein elektrisches Heizelement 45 aufweist, mittels dessen im Aktuatorgehäuse 41 gelagertes Dehnmaterial erwärmbar ist, welches den Aktuatorstössel 42 nach aussen treiben kann. Die elektrischen Anschlüsse 451, 452 des Heizelements 45 werden vorzugsweise über die Rückstellfeder 22 und die Kontaktfeder 21 mit den Anschlussleitungen 51, 52 verbunden.

Figur 3 zeigt einen Schnitt durch die für die Betriebsart "stromlos zu" konfigurierte Stellvorrichtung 1 von Figur 1, die in der oben beschriebenen Weise zusammengebaut wurde. Es ist gezeigt, dass das rohrförmige zweite Gehäuseteil 12 ein oberes konisches Teil 121 und ein unteres zylindrisches Teil 122 aufweist, die durch eine Trennwand 123 voneinander getrennt sind, so dass eine obere erste Kammer 12A und eine untere zweite Kammer 12B gebildet werden. Die Trennwand 123 weist ein nach oben geöffnetes, zylinderförmiges Aufnahmeteil 124 auf, in das ein Teil 412 des Aktuatorgehäuses 41 derart einsetzbar ist, dass es innerhalb des Aufnahmeteils 124 entlang der Achse x verschiebbar gelagert ist. Der Aktuator 4 ist dabei derart in das Aufnahmeteil 124 eingesetzt, dass der Aktuatorstössel 42 am Zylinderboden 1241 des Aufnahmeteils 124 anliegt und beim Ausfahren die axiale Verschiebung des Aktuatorgehäuses 41 bewirkt.

Im Zylinderboden 1241 sind drei Durchtrittsöffnungen 1242 vorgesehen, durch die drei Stössel 61 des Stellteils 6 hindurchgeführt sind. Das Stellteil 6 ist daher in der zweiten Kammer 12B des zweiten Gehäuseteils 12 angeordnet und wird nach der Montage der Stellvorrichtung 1 vom Ventilkolben 9 des angeschlossenen Heizkreisventils nach oben gegen das Aktuatorgehäuse 41 gedrückt. Das Aktuatorgehäuse 41 wird demgegenüber von der Rückstellfeder 22, die von der ebenfalls am Aktuator 4 anliegenden Kontaktfeder 21 unterstützt wird, nach unten gegen das Stellteil 6 und somit gegen den schematisch gezeigten Ventilkolben 9 gedrückt. Da die Federkräfte der Rückstellfeder 22 und der Kontaktfeder 21 grösser sind, als die Kraft der im Heizkreisventil vorgesehenen Kolbenfeder, bleiben der Ventilkolben 9 und das Stellteil 6 stationär gehalten. Durch das Ausfahren des Aktuatorstössels 42 wird das Aktuatorgehäuse 41 hingegen nach oben verschoben, wonach die Stössel 61 des Stellteils 6, gestossen vom Ventilkolben 9, weiter in das Aufnahmeteil 124 eindringen können. Nach dem Einfahren des Aktuatorstössels 42 werden das Aktuatorgehäuse 41, das Stellteil 6 und der Ventilkolben 9 von der Rückstellfeder 22 und der Kontaktfeder 21 wieder nach unten verschoben.

Die Anordnung des Aufnahmeteils 124 innerhalb der Trennwand 123 erlaubt daher, den Aktuator 4 einfach und sicher zu lagern.

Die einzige Verbindung zwischen der ersten und der zweiten Kammer 12A, 12B des zweiten Gehäuseteils 12 bilden somit die drei Durchtrittsöffnungen 1242 in der Trennwand 123 bzw. im Aufnahmeteil 124. Hinsichtlich des Eindringens von Wasser in die Stellvorrichtung 1, d.h. in die erste Kammer 12A sind daher nur diese drei Durchtrittsöffnungen 1242 relevant.

In der gezeigten Position, in der die Stellvorrichtung 1 über einem Heizkreisventil montiert ist, besteht grundsätzlich keine Gefahr, dass Wasser durch die Durchtrittsöffnungen 1242 in die erste Kammer 12A eindringen und die dort vorgesehenen Vorrichtungsteile 21, 22, 4 schädigen kann. Selbst bei horizontaler oder schräger Montage der Stellvorrichtung 1 kann Wasser durch Öffnungen 1221, 1222, 1223, 1224 und 1225 entweichen, die im unteren Rohrteil 122 des zweiten Gehäuseteils 12 vorgesehen sind. Sofern die Stellvorrichtung 1 hingegen unterhalb eines Heizkreisventils montiert wird, besteht die Gefahr, dass aus dem Heizkreisventil in die zweite Kammer 12B eindringendes Wasser durch die Durchtrittsöffnungen 1242 in die erste Kammer 12A gelangen könnte.

Um dies zu verhindern weist das in Figur 6 vereinzelt gezeigte Stellteil 6 einen Hut oder Zylinder 62 auf, dessen Abmessungen derart gewählt sind, dass das Aufnahmeteil 124 vom Hut 62 überdeckt und teilweise umschlossen und dadurch nach aussen abgeschirmt wird. Innerhalb des Huts 62 sind die drei genannten Stellteilstössel 61 vorgesehen, welche in die Durchtrittsöffnungen 1242 eingeführt werden.

Bei vertikaler Ausrichtung und Montage der Stellvorrichtung 1 unterhalb des Heizkreisventils (so genannte hängende Montage) trifft in die zweite Kammer 12B eindringendes Wasser daher auf das hutförmige Stellteil 6, welches das mit den Durchlassöffnungen 1242 versehene Aufnahmeteil 124 zuverlässig abschirmt. Das eindringende Wasser fliesst somit über das Stellteil 6 hinweg und wird an der untersten Stelle der zweiten Kammer 12B gesammelt und über die unterste Öffnung 1225 im zweiten Rohrteil 122 aus der zweiten Kammer 12B nach aussen abgeführt. Ein Eindringen von Wasser in die erste Kammer 12A wird somit ohne die Verwendung eines verschleissanfälligen Dichtungsrings verhindert, wie er beispielsweise bei der in [1] beschriebenen Vorrichtung verwendet wird.

Ferner weist das Stellteil 6 an der Aussenseite des Huts 62 ein Halteelement 64 und ein Anzeigeelement 63 auf. Wie dies in Figur 3 gezeigt ist, wird das Halteelement 64 in eine im zweiten Gehäuseteil 12 vorgesehene Längsöffnung 1223 eingeführt und bleibt dort verschiebbar gehalten. Da die in die Durchtrittsöffnungen 1242 eingeführten Stössel 61 des Stellteils 6 axial ausgerichtet sind, kann sich das Stellteil 6 somit nicht selbsttätig lösen. Erst nach dem Lösen des Halteelements 64 aus der Längsöffnung 1223 kann das Stellteil 6 wieder entfernt, gegebenenfalls ausgetauscht werden. Das Anzeigeelement 63 wird bei der Betätigung des Aktuators 4 zwischen der ersten und der zweiten Fensteröffnung 1221, 1222 auf und ab geführt. In Figur 3 ist die Stellvorrichtung 1 im Ruhezustand, weshalb das Anzeigeelement 63 durch die untere Fensteröffnung 1221 sichtbar ist.

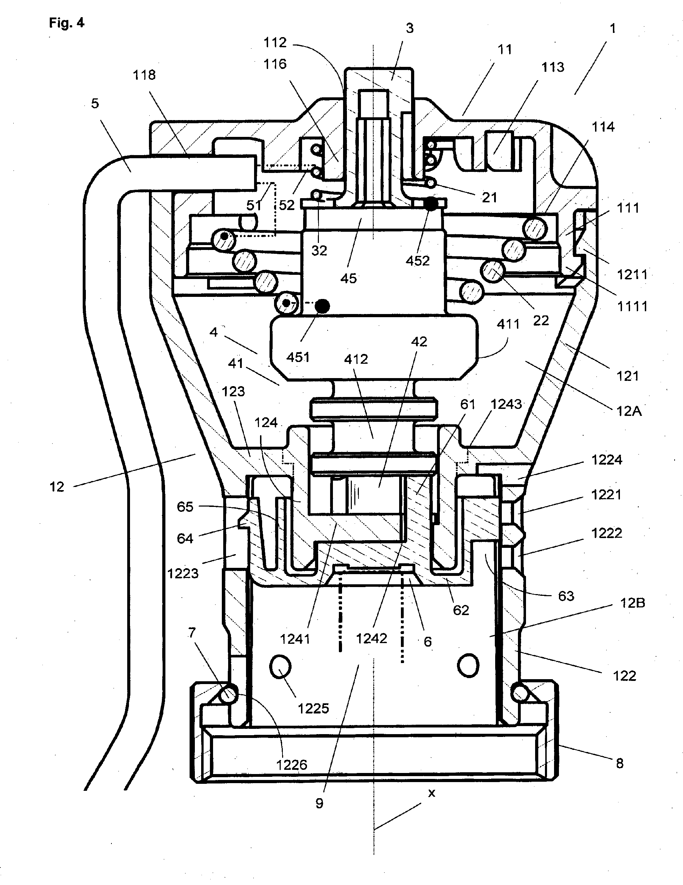

Figur 4 zeigt einen Schnitt durch die Stellvorrichtung 1 von Figur 1 mit dem Aktuator 4 in aktivem Zustand mit vollständig ausgefahrenem Aktuatorstössel 42 und angehobenem Aktuatorgehäuse 41. Mittels des Ventilkolbens 9 sind die Stellteilstössel 61 daher maximal in das Aufnahmeteil 124 eingeschoben worden. Gleichzeitig wurde das Heizkreisventil geöffnet. Das Anzeigeelement 63 die Stellteils 6 ist daher durch die obere Fensteröffnung 1222 sichtbar.

Die Verwendung von zwei Fensteröffnungen 1222, 1221 erlaubt die eindeutige Erkennung der Position des Stellteils 9 und somit des Zustands des Heizkreisventils.

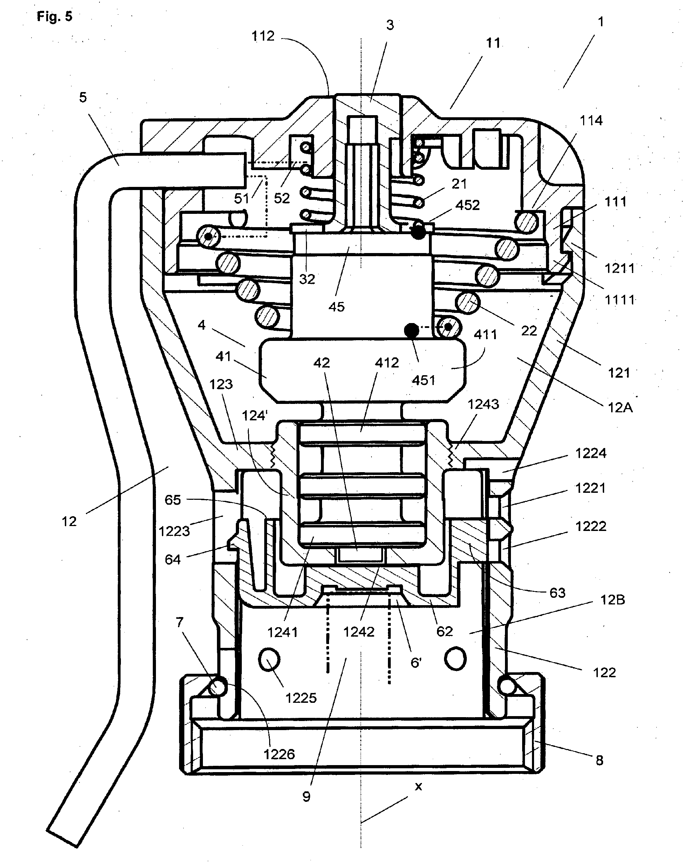

Figur 5 zeigt einen Schnitt durch die für die Betriebsart "stromlos offen" konfigurierte Stellvorrichtung 1 von Figur 1 mit dem Aktuator 4 im Ruhezustand mit eingefahrenem Aktuatorstössel 42. Das untere Teil 412 des Aktuatorgehäuses 41 ist im Aufnahmeteil 124' mittels der Rückstellfeder 22 und der Kontaktfeder 21 stationär gehalten und gegen den Zylinderboden 1241 gedrückt, in dem eine Durchtrittsöffnung 1242 vorgesehen ist, in die der Aktuatorstössel 42 hinein ragt. Bei dieser Betriebsart "stromlos offen" kann der Aktuatorstössel 42 ausgefahren werden, um das Stellteil 6' mit dem Ventilkolben 9 zurück zu schieben und das Heizkreisventil zu schliessen. Das für diese Betriebsart vorgesehene Stellteil 6' weist vorzugsweise keine Stössel 61 auf. Stattdessen kann das Stellteil 6' mit zusätzlichen Halteelementen 64 versehen sein, die in Längsschlitzen gehalten sind.

In den Figuren 3, 4 und 5 ist gezeigt, dass das Aufnahmeteil 124 bzw. 124' bei diesen vorzugsweisen Ausgestaltungen der Stellvorrichtung 1 lösbar mit der Trennwand 123 verbunden ist. In der gezeigten Ausgestaltung ist das Aufnahmeteil 124 bzw. 124' mittels eines Gewindes oder einer einfachen Flanschverbindung 1243 mit der Trennwand 123 gekoppelt. Selbstverständlich sind jedoch auch andere Verbindungen oder Verschlüsse, wie Bajonettverschlüsse verwendbar. Der Anwender kann daher entsprechend der gewählten Betriebsart das entsprechende Aufnahmeteil 124 bzw. 124' sowie das entsprechende Stellteil 6 bzw. 6' einsetzen, was mit wenigen Handgriffen vollzogen werden kann. Selbstverständlich können die Trennwand 123 und das Aufnahmeteil 124 auch einstückig miteinander verbunden sein, wenn die Stellvorrichtung 1 nur in einer Betriebsart betrieben werden soll.

Figur 9 zeigt in einer vorzugsweisen Ausgestaltung den elektrischen Schaltkreis der Stellvorrichtung 1, in den die Rückstellfeder 22 und die Kontaktfeder 21 seriell eingefügt und mit dem Aktuator 4 bzw. mit dem Heizelement 45 verbunden sind. Zur besseren Übersicht sind die genannten Teile 4, 21, 22 nicht ineinander verschoben. Alle gezeigten Kontaktpunkte resultieren aufgrund der Federkräfte durch kraftschlüssige Verbindung. Durch das Einsetzen der Kontaktfeder 21 und der Rückstellfeder 22 resultiert daher nicht nur eine vorteilhafte mechanische Verbindung, sondern auch eine zuverlässige elektrische Verbindung des Aktuators 4 mit dem Anschlussleitungen 51, 52. Alternativ kann auch nur die Kontaktfeder 21 oder die Rückstellfeder 22 oder keine der genannten Federn 21, 22 in den Stromkreis eingeschaltet sein.

Mit der vorliegenden Erfindung wurden bekannte Stellvorrichtungen in vielfältiger Weise signifikant verbessert. Die einzelnen Teillösungen, die in den beispielsweise gezeigten Ausgestaltungen allesamt realisiert sind, können jedoch auch unabhängig voneinander eingesetzt werden.

Die direkte Kopplung der Rückstellfeder 22 mit dem vorteilhaft gelagerten Aktuator 4 ergibt einen deutlich vereinfachten Aufbau der Stellvorrichtung 1. Durch die Verwendung der Rückstellfeder 22 und/oder der Kontaktfeder 21 wird das gesamte elektrische System vereinfacht.

Die Kopplung des Aktuators 4 mit dem nach aussen geführten Signalzapfen 3 erlaubt die Observierung des Zustands des Aktuators 4, während mittels des Stellteils 6 als Anzeigemittel der Zustand des Heizkreisventils observiert werden kann. Anhand der erfindungsgemässen Anzeigemittel 3, 6 bzw. 63 kann daher der Zustand der Stellvorrichtung 1 und des Heizkreisventils auf einen Blick ermittelt Werden. Die Verwendung des Signalzapfens 3 hat zudem den Vorteil, dass der Zustand des Aktuators 4 auch manuell abgetastet werden kann, was bei mangelhafter Sicht besonders vorteilhaft ist.

Die Verwendung des hutförmigen Stellteils 6, durch das das mit der Trennwand 123 verbundene Aufnahmeteil 124 überdeckt wird, erlaubt die zuverlässige Abdichtung der Stellvorrichtung 1, ohne dass verschleissanfällige Dichtungselemente benötigt werden. Anhand dieser Massnahme kann die erfindungsgemäss die Stellvorrichtung beliebig montiert werden. Sofern, z.B. aufgrund der konsequenten Montage der Stellvorrichtung 1 über dem Heizkreisventil, das Eindringen von Wasser nicht zu befürchten ist, kann auf die Verwendung derart ausgestalteter Stellteile 6 auch verzichtet werden. Umgekehrt kann die erfindungsgemässe Lösung mit abschirmenden Stellteilen auch dann eingesetzt werden, wenn anstelle der erfindungsgemässen Ausgestaltung der Federelemente 21, 22, in der ersten Kammer 12A der Stellvorrichtung 1 eine konventionelle Lösung aus dem Stand der Technik angewendet wird. Gezeigt und beschrieben wurde daher nur die vorteilhafteste Ausgestaltung der erfindungsgemässen Lösung.

## Patentansprüche

1. Stellvorrichtung (1) für Heizkreisventile mit einem ein- oder mehrteiligen Vorrichtungsgehäuse (11, 12), in dem eine Rückstellfeder (22), ein Stellteil (6) und ein mit einer ersten und einer zweiten elektrischen Versorgungsleitung (51; 52) verbundener Aktuator (4) vorgesehen sind, der ein Aktuatorgehäuse (41) und einen ausfahrbaren Aktuatorstössel (42) aufweist, wobei das Vorrichtungsgehäuse (11, 12) ein rohrförmiges zweites Gehäuseteil (12) aufweist, das an seinem nach aussen geöffneten Oberteil (121) durch ein lösbares erstes Gehäuseteil (11) abgedeckt und an dem gegenüberliegenden, nach aussen geöffneten Unterteil (122) mit einem Heizkreisventil verbindbar ist, **dadurch gekennzeichnet, dass** das Gehäuseteil (12) zwischen dem Oberteil (121) und dem Unterteil (122) eine Trennwand (123) aufweist, die mit einem vorzugsweise zylinderförmigen Aufnahmeteil (124) versehen ist, dessen Boden (1241) mit wenigstens einer Durchtrittsöffnung (1242) versehen ist, durch die hindurch der Aktuator (4) und das Stellteil (6) einander kontaktieren, wobei das Stellteil (6) hutförmig ausgestaltet ist und das Aufnahmeteil (124) derart überdeckt, dass die Durchtrittsöffnung (1242) gegen das Eindringen von Wasser abgeschirmt ist.

2. Stellvorrichtung (1) nach Anspruch 1, **dadurch gekennzeichnet, dass** die Rückstellfeder (22) einerseits am Vorrichtungsgehäuse (11) und andererseits direkt am Aktuatorgehäuse (41) abgestützt ist, wobei
a) das Aktuatorgehäuse (41) am Stellteil (6) und der Aktuatorstössel (42) am Vorrichtungsgehäuse (12) anliegt, oder
b) das Aktuatorgehäuse (41) am Vorrichtungsgehäuse (12) und der Aktuatorstössel (42) am Stellteil (6) anliegt.

3. Stellvorrichtung (1) nach Anspruch 2, **dadurch gekennzeichnet, dass** die konisch verlaufende Rückstellfeder (22) an dem Ende (221) mit dem grösseren Durchmesser am Vorrichtungsgehäuse (1), vorzugsweise am ersten Gehäuseteil (11), und an dem Ende (222) mit dem kleineren Durchmesser am Aktuatorgehäuse (41) anliegt.

4. Stellvorrichtung (1) nach Anspruch 1, 2 oder 3, **dadurch gekennzeichnet, dass** das Unterteil (122) mit einem Kopplungsteil (1226) und einem mit einem Heizkreisventil verbindbaren Kopplungselement (8) versehen ist.

5. Stellvorrichtung (1) nach einem der Ansprüche 1-4, **dadurch gekennzeichnet, dass** im Aufnahmeteil (124) wenigstens ein Teil (412) des Aktuatorgehäuses (41) fest oder verschiebbar gehalten ist, und dass die Durchtrittsöffnung (1242) der Durchführung des Aktuatorstössels (42) oder der Durchführung eines Stellteilstössels (61) dient.

6. Stellvorrichtung (1) nach einem der Ansprüche 1-5, **dadurch gekennzeichnet, dass** die metallene Rückstellfeder (22) mit der ersten elektrischen Anschlussleitung (51) und einem ersten Anschluss (451) des Aktuators (4) verbunden ist.

7. Stellvorrichtung (1) nach einem der Ansprüche 1-6, **dadurch gekennzeichnet, dass** die zweite Anschlussleitung (52) über eine Kontaktfeder (21) mit dem zweiten Anschluss (452) des Aktuators (4) verbunden und zwischen dem Aktuator (4) und dem ersten Gehäuseteil (11) angeordnet ist.

8. Stellvorrichtung (1) nach einem der Ansprüche 1-7, **dadurch gekennzeichnet, dass** die Rückstellfeder (22), der Aktuatorstössel (42) und, sofern vorhanden, die Kontaktfeder (21) koaxial zur Längsachse der Stellvorrichtung (1) ausgerichtet sind.

9. Stellvorrichtung (1) nach einem der Ansprüche 1-8, **dadurch gekennzeichnet, dass** das erste Gehäuseteil (11) eine Deckelöffnung (112) zur Durchführung eines Signalzapfens (3) aufweist, der auf dem Aktuator (4) sitzt und vorzugsweise einen Flansch (32) aufweist, welcher mittels der Kontaktfeder (21) gegen den Aktuator (4) gedrückt ist.

10. Stellvorrichtung (1) nach Anspruch 9, **dadurch gekennzeichnet, dass** der Signalzapfen (3) eine Nase (33) aufweist, die innerhalb eines Kanals (1121) in der Deckelöffnung (112) durch diese hindurch führbar ist, oder dass der Signalzapfen (3) eine Rille aufweist, in die ein Führungsteil der Deckelöffnung (112) hineinragt.

11. Stellvorrichtung (1) nach einem der Ansprüche 1 - 10, **dadurch gekennzeichnet, dass** das Unterteil (122) des zweiten Gehäuseteils (12) mit wenigstens einer Öffnung (1221, 1222, 1223, 1224, 1225) versehen ist,
a) durch die Wasser nach aussen abfliessen kann; und/oder
b) durch die ein am Stellteil (6) vorgesehenes Anzeigeelement (61) in einer ersten Position, in der der Aktuatorstössel (42) eingefahren ist, und/oder einer zweiten Position, in der der Aktuatorstössel (42) ausgefahren ist, sichtbar ist; und/oder
c) durch die ein am Stellteil (6) vorgesehenes Halteelement (64) führbar ist.

12. Stellvorrichtung (1) nach einem der Ansprüche 1-11, **dadurch gekennzeichnet, dass** das erste Gehäuseteil (11) Montageelemente (1131, 1132, 1133, 1134, 118) für die Durchführung und Befestigung der Anschlussleitungen (51, 52) sowie eine mit der Deckelöffnung (112) versehene, gegen das zweite Gehäuseteil (12) gerichtete Hülse (111) aufweist, die dem Halten der Kontaktfeder dient.

13. Stellvorrichtung (1) nach einem der Ansprüche 1-12, **dadurch** gekenntzeichnet, **dass** der Aktuator (4) ein thermomechanisches Arbeitselement ist, der ein mit den Versorgungsleitungen (51, 52) verbundenes Heizelement (45) umfasst, mittels dessen ein im Aktuatorgehäuse (41) gelagertes Dehnmaterial erwärmbar ist, welches auf den Aktuatorstössel (42) einwirkt, wobei der Aktuatorstössel (42) parallel zur Achse des Ventilkolbens dem Heizkreisventil zu oder abgewandt ist.

14. Stellvorrichtung (1) nach einem der Ansprüche 1-13, **dadurch gekennzeichnet, dass** das Aktuatorgehäuse (41) ein vorzugsweise ringförmiges Flanschelement (411) aufweist, auf das die Rückstellfeder (22) abgestützt ist, wobei ein Teil der Aktuatorgehäuses (41) von der Rückstellfeder (22) umschlossen ist.

15. Heizkreisventil mit einer Stellvorrichtung (1) nach einem der Ansprüche 1 - 14.

## Claims

1. Control device (1) for heating circuit valves with a one-part or multi-part device housing (11, 12), in which a return spring (22), a control member (6) and an actuator (4) are provided that is connected to a first and a second electrical supply line (51; 52) and that comprises an actuator housing (41) and a movable actuator plunger (42), wherein the device housing (11, 12) comprises a tubular second housing member (12), which at its upper part (121), which is open towards the outside, is covered by a releasable first housing member (11) and which at its opposite lower part (122), which is open towards the outside, is connectable to a heating circuit valve, **characterised in that** the housing member (12) comprises between the upper part (121) and the lower part (122) a separation wall (123), which is provided with a preferably cylindrical receiving member (124) having a bottom (1241) that is provided with at least one passage opening (1242), through which the actuator (4) and the control member (6) contact one another, wherein the control member (6) is hat-shaped and covers the receiving member (124) in such a way, that the passage opening (1242) is shielded against the penetration of water.

2. Control device (1) according to claim 1, **characterised in that** the return spring (22) is seated on one side at the device housing (11) and on the other side directly at the actuator housing (41), wherein
a) the actuator housing (41) is adjoining the control member (6) and the actuator plunger (42) is adjoining the device housing (12), or
b) the actuator housing (41) is adjoining the device housing (12) and the actuator plunger (42) is adjoining the control member (6).

3. Control device (1) according to claim 2, **characterised in that** the conically extending return spring (22) is adjoining at the end (221) having the larger diameter the device housing (1), preferably at the first housing member (11), and at the end (222) having the smaller diameter the actuator housing (41).

4. Control device (1) according to claim 1, 2 or 3, **characterised in that** the lower part (122) is provided with coupling member (1226) and with a coupling element (8) that is connectable to the heating circuit valve.

5. Control device (1) according to one of the claims 1-4, **characterised in that** in the receiving member (124) at least a part (412) of the actuator housing (41) is held firmly or slideably, and that the passage opening (1242) serves for letting the actuator plunger (42) or the control member plunger (61) pass through.

6. Control device (1) according to one of the claims 1 - 5, **characterised in that** the metal return spring (22) is connected to the first electrical supply line (51) and a first electrical contact (451) of the actuator (4).

7. Control device (1) according to one of the claims 1 - 6, **characterised in that** the second connecting line (52) is connected via a contact spring (21) to the second contact (452) of the actuator (4) and is arranged between the actuator (4) and the first housing member (11).

8. Control device (1) according to one of the claims 1 - 7, **characterised in that** the return spring (22), the actuator plunger (42) and, if present, the contact spring (21) are coaxially aligned with reference to the longitudinal axis of the control device (1).

9. Control device (1) according to one of the claims 1 - 8, **characterised in that** the first housing member (11) comprises a cover opening (112) letting pass through a signalling pin (3), which is seated on the actuator (4) and which preferably comprises a flange (32) that is pressed against the actuator (4) by means of the contact spring (21).

10. Control device (1) according to claim 9, **characterised in that** the signalling pin (3) comprises a nose (33), which is, guided within a channel (1121) provided in the cover opening (112), transferable through the cover opening (112), or that the signalling pin (3) comprises a groove, in which a guide member of the cover opening (112) is engaged.

11. Control device (1) according to one of the claims 1 - 10, **characterised in that** the lower part (122) of the second housing member (12) comprises at least one opening (1221, 1222, 1223, 1224, 1225),
a) through which water can penetrate to the outside; and/or
b) through which an indicator element (61) provided on the control member (6) is visible in a first position, in which the actuator plunger (42) is retracted, and/or in a second position, in which the actuator plunger (42) is extended; and/or
c) through which a holding element (64) provided on the control member (6) is guidable.

12. Control device (1) according to one of the claims 1-11, **characterised in that** the first housing member (11) comprises mounting elements (1131, 1132, 1133, 1134, 118) for passing through and fastening the connecting lines (51, 52) as well as a sleeve (111) that is provided with the cover opening (112), that is directed towards the second housing member (12), and that source for holding the contact spring.

13. Control device (1) according to one of the claims 1-12, **characterised in that** the actuator (4) is a thermomechanical operating element, which comprises a heating element (45) that is connected to the supply lines (51, 52), with which an extendable material stored in the actuator housing (41) can be heated, which extendable material acts on the actuator plunger (42), whereby the actuator plunger (42) is aligned in parallel to the axis of the valve plunger extending towards or away from the heating circuit valve.

14. Control device (1) according to one of the claims 1-13, **characterised in that** the actuator housing (41) comprises a preferably ring-shaped flange element (411), on which the return spring (22) is seated, whereby a part of the actuator housing (41) is enclosed by the return spring (22).

15. Heating circuit valve with a control device (1) according to one of the claims 1 - 14.

## Revendications

1. Dispositif de réglage (1) pour vannes de circuit de chauffage présentant un boîtier de dispositif (11, 12) réalisé en une ou plusieurs parties, dans lequel il est prévu un ressort de rappel (22), un organe de réglage (6) et un actionneur (4) relié à une première et une seconde ligne d'alimentation électrique (51; 52), lequel présente un boîtier d'actionneur (41) et un piston d'actionneur mobile (42), le boîtier de dispositif (11, 12) présentant une seconde partie de boîtier (12) tubulaire qui présente une partie supérieure (121) ouverte vers l'extérieur et recouverte par la première partie de boîtier amovible (11) et en face une partie inférieure (122) ouverte vers l'extérieur et connectable à une vanne de circuit de chauffage, **caractérisé en ce que** la partie de boîtier (12) est munie, entre la partie supérieure (121) et la partie inférieure (122), d'une cloison de séparation (123) qui est munie d'un organe de logement (124) de préférence cylindrique dont le fond (1241) est muni d'au moins une ouverture de passage (1242), à travers laquelle l'actionneur (4) et l'organe de réglage (6) peuvent entrer en contact, l'organe de réglage (6) ayant la forme d'un chapeau et recouvrant la partie de logement cylindrique (124) de manière à ce que l'ouverture de passage (1242) soit protégée contre la pénétration d'eau.

2. Dispositif de réglage (1) selon la revendication 1, **caractérisé en ce que** le ressort de rappel (22) s'applique d'une part directement sur le boîtier amovible (11) et d'autre part côté directement sur le boîtier d'actionneur (41),
(a) le boîtier d'actionneur (41) s'appliquant sur l'organe de réglage (6) et le piston d'actionneur (42) s'appliquant sur la seconde partie de boîtier (12), ou
(b) le boîtier d'actionneur (41) s'appliquant sur la seconde partie de boîtier (12) et le piston d'actionneur (42) s'appliquant sur l'organe de réglage (6).

3. Dispositif de réglage (1) selon la revendication 2, **caractérisé en ce que** le ressort de rappel conique (22) s'applique à l'extrémité (221) de plus grand diamètre contre le boîtier de dispositif (1), de préférence contre une première partie de boîtier amovible (11) et à l'extrémité (222) de plus petit diamètre contre le boîtier d'actionneur (41).

4. Dispositif de réglage (1) selon une des revendications 1, 2 ou 3, **caractérisé en ce que** la partie inférieure (122) est munie d'une partie d'accouplement (1226) et d'un élément d'accouplement (8) reliable à une vanne de circuit de chauffage.

5. Dispositif de réglage (1) selon une des revendications 1 à 4, **caractérisé en ce que** dans la partie de logement (124), au moins une partie (412) du boîtier d'actionneur (41) est maintenue fixe ou coulissante et que l'ouverture de passage (1242) sert au passage du piston d'actionneur (42) ou au passage d'un piston d'organe de réglage (61).

6. Dispositif de réglage (1) selon une des revendications 1 à 5, **caractérisé en ce que** le ressort de rappel métallique est relié à la première ligne d'alimentation électrique (51) et à un premier raccordement électrique (451) de l'actionneur (4).

7. Dispositif de réglage (1) selon une des revendications 1 à 6, **caractérisé en ce que** la seconde ligne de d'alimentation électrique (52) est reliée par un ressort de contact (21) au deuxième raccordement électrique (452) de l'actionneur (4) et est disposée entre l'actionneur (4) et la première partie de boîtier (11).

8. Dispositif de réglage (1) selon une des revendications 1 à 7, **caractérisé en ce que** le ressort de rappel (22), le piston d'actionneur (42) et si existant, le ressort de contact (21), sont orientés coaxialement par rapport à l'axe longitudinal du dispositif de réglage (1).

9. Dispositif de réglage (1) selon une des revendications 1 à 8, **caractérisé en ce que** la première partie de boîtier (11) présente une ouverture de couvercle (112) pour le passage d'un tenon de signalisation (3) qui repose sur l'actionneur (4) et présente de préférence une bride (32) qui est pressée contre l'actionneur (4) au moyen du ressort de contact (21).

10. Dispositif de réglage selon la revendication 9, **caractérisé en ce que** le tenon de signalisation (3) présente un ergot (33) qui peut être guidé à l'intérieur d'un canal (1121) ménagé dans l'ouverture de couvercle (112) pour la traverser, ou **en ce que** le tenon de signalisation (3) présente une rainure dans laquelle s'engage un organe de guidage de l'ouverture de couvercle (112).

11. Dispositif de réglage (1) selon une des revendications 1 à 10, **caractérisé en ce que** la partie inférieure (122) de la second partie de boîtier (12) est munie d'au moins une ouverture (1221, 1222, 1223, 1224, 1225),
a) à travers laquelle l'eau peut s'écouler vers l'extérieur ; et/ou
b) à travers laquelle un élément d'affichage (61) prévu sur l'organe de réglage (6) est visible dans une première position dans laquelle le piston d'actionneur (42) est entré et/ou dans une seconde position dans laquelle le piston d'actionneur (42) est sorti ; et/ou
c) à travers laquelle l'élément de retenue (64) prévu sur l'organe de réglage (6) peut être guidé.

12. Dispositif de réglage (1) selon une des revendications 1 à 11, **caractérisé en ce que** la première partie de boîtier (11) présente des éléments de montage (1131, 1132, 1133, 1134, 1134, 118) pour le passage et la fixation des lignes de raccordement (51, 52) ainsi qu'un manchon (111) orienté en direction de la seconde partie de boîtier (12), munie de l'ouverture de couvercle (112) et servant au maintien du ressort de contact.

13. Dispositif de réglage (1) selon une des revendications 1 à 12, **caractérisé en ce que** l'actionneur (4) est un élément de travail thermomécanique qui comprend un élément de chauffage (45) relié aux lignes d'alimentation (51, 52), au moyen duquel un matériau extensible logé dans le boîtier d'actionneur (41) peut être réchauffé lequel agit sur le piston d'actionneur (42), le piston d'actionneur (42) étant parallèle à l'axe du piston de vanne en direction ou en s'éloignant de la vanne de circuit de chauffage.

14. Dispositif de réglage (1) selon une des revendications 1 à 13, **caractérisé en ce que** le boîtier d'actionneur (41) présente un élément de bride (411) de préférence annulaire sur lequel s'appuie le ressort de rappel (22), une partie du boîtier d'actionneur (41) étant entourée par le ressort de rappel (22).

15. Vanne de circuit de chauffage comprenant un dispositif de réglage (1) selon une des revendications 1 à 14.
